# EUROPEAN PATENT SPECIFICATION

(11) **EP 3 121 905 B1**
(45) Date of publication and mention of the grant of the patent: **10.07.2019**
(21) Application number: 16179987.9
(22) Date of filing: 18.07.2016
(51) Int. Cl.: H01R 9/03, H05K 7/02

(54) **CABLING SYSTEM AND METHOD FOR CONNECTING ELECTRONIC PRINTED CIRCUIT BOARDS**
VERKABELUNGSSYSTEM UND VERFAHREN ZUR VERBINDUNG VON ELEKTRONISCHEN LEITERPLATTEN
SYSTÈME DE CÂBLAGE ET PROCÉDÉ DE CONNEXION DE CARTES DE CIRCUIT IMPRIMÉ ÉLECTRONIQUE

(30) Priority: 20.07.2015 IT UB20152316
(43) Date of publication of application: 25.01.2017
(73) Proprietor: Automotive Lighting Italia S.p.A., 10078 Venaria Reale (Torino) (IT)
(72) Inventor: ENGLARO, Andrea, I-10078 Venaria Reale, TORINO (IT); MEDDA, Eugenio, I-10078 Venaria Reale, TORINO (IT); AVOLIO, Giuseppe, I-10078 Venaria Reale, TORINO (IT)
(74) Representative: Chimini, Francesco

(56) References cited:
- JP-A- H04 319 267
- JP-A- 2001 334 888
- US-A- 5 242 314
- US-A1- 2003 077 933
- US-A1- 2006 197 474

## Description

This invention covers a cabling system, in particular to deliver independent electrical power supplies to a plurality of electronic printed circuit boards, for example the boards of a motor vehicle lamp.

Many electrical or electronic devices include a plurality of printed circuit boards spaced, and sometimes arranged parallel with each other, to each of which must be brought a respective power supply, the ground and possibly other signals, for example, for diagnostics.

For example, in the same motor vehicle lamp there are printed circuit boards for lights having different functions, for example, position, turn and stop lights, etc. To the light is fixed an electrical connector (called in the jargon "car connector") to which is connected a bundle of power supply, ground and diagnostic cables. The different electronic boards of the light must be connected through respective cables to this connector, so as to be independently powered, connected to ground and possibly controlled by means of diagnostic signals.

In some cases, such as for the motor vehicle lamp, it is of primary importance to perform the electrical cabling of the boards so as to reduce as much as possible the space occupied by the cables, the length of the cables themselves, and optimise the path of the cables to reduce the risk of breakage, overheating, etc.

Moreover, there is a need to perform the cabling of the electronic boards in an automatic or semi-automatic manner.

To attempt to meet these needs, use is often made of insulation-piercing multipolar connectors with a "splitter" function, i.e., in which the electrical cable enters the connector, such as a grounding cable or a power cable, and several output electrical cables exit from the connector, all connected to the input cable and directed towards the boards to be simultaneously connected to earth or powered. Document US2006/0197474 discloses a cabling system for connecting, to a plurality of electronic printed circuit boards, a common electrical cable, for example a grounding cable, and respective electrical board wires, for example power supply cables for independently powering at least some of said electronic boards, comprising: - a bundle of electrical cables comprising the common electrical cable and a plurality of board cables ; - a plurality of multipolar, insulation-piercing connectors placed in succession along said bundle of cables, each of said connectors being suitable to be connected to a respective electronic board for electrically connecting, to said electronic board, the common cable and at least a board cable, each insulation-piercing connector, with the exception of a connector terminal that terminates the bundle of cables, being suitable to receive the common electrical cable, the board cable to be connected to the respective electronic board, and the board cables that must be connected to the successive connectors, and being configured to transmit to a successive insulation-piercing connector, or the terminal connector, the common electrical cable and the board cables that must be connected to the successive connectors, wherein each insulation-piercing connector is provided with cable seats electrically insulated from each other and suitable to receive respective cables in input to the connector, wherein the cable seats for the cables that exit from the connector are pass-through seats, and wherein the cable seats for the cables that must be electrically connected to the electronic board to which the connector is fixed are engageable by respective insulation-piercing electrical contacts suitable to cut or pierce the respective electrical cable.

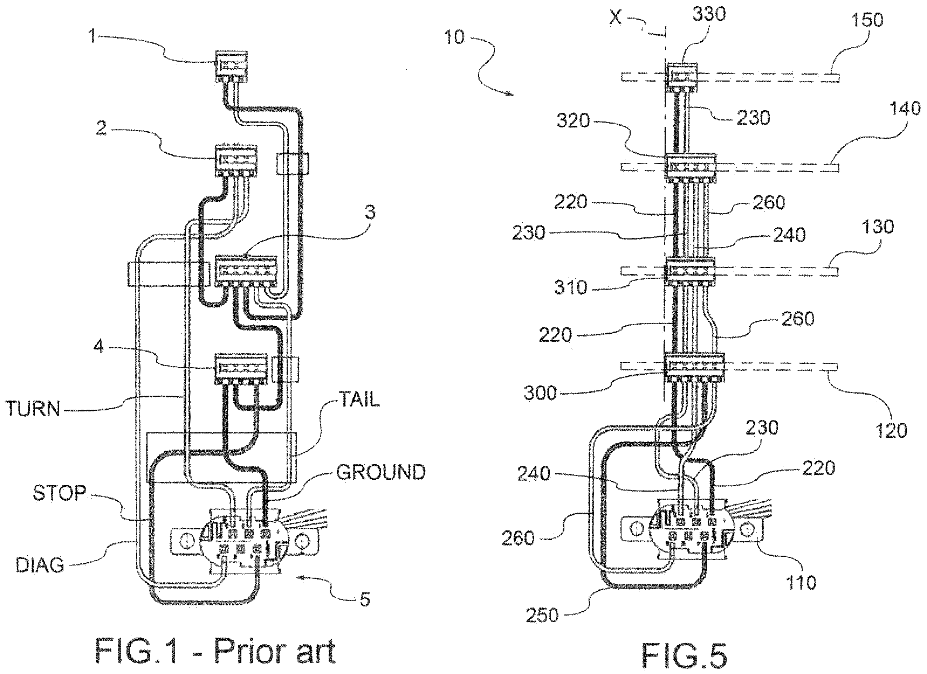

Figure 1 illustrates a system for cabling the electronic printed circuit boards of a motor vehicle lamp according to the prior art. In the example shown, the motor vehicle lamp comprises two electronic boards for a rear light (Tail Up and Tail Lower), an electronic board for the turn signal (Turn) and an electronic board for the brake light (Stop). To each of these boards is fixed a respective insulation-piercing connector 1 to 4. To the light is fixed an input electrical connector 5 from which extend a GROUND cable, a power supply cable of the rear light TAIL, a power cable of the direction indicator TURN, a power cable of the brake light STOP, and a diagnostic cable DIAG to check the correct operation of the turn signal.

As you can see, the GROUND cable enters the connector 4 of the brake light, exits from this connector 4 and enters the connector 3 of the Tail Low light. From this connector 3, two GROUND cables exit, one directed to the connector 2 of the turn signal and one directed to the connector 1 of the rear light Tail Up.

The power supply cable of the rear light TAIL enters the connector 3 of the Tail Low light, exits from this connector 3 and enters the connector 1 of the Tail Up light.

The power supply cable of the TURN signal enters directly into the connector 2 of the Turn signal.

The power supply cable of the STOP light enters directly into the connector 4 of the Stop light.

The diagnostic cable DIAG enters directly into the connector 2 of the Turn signal.

As can be seen from Figure 1, although, compared to a traditional connection in which each board is connected to the input electrical connector to the lamp (car connector) in a manner completely independent from the others, the use of splitter connectors allowed achieving a certain rationalisation, at least as regards the ground cable, the cabling system still presents cables that extend between the input electrical connector and boards in a disorderly manner and form branches and curves that can give rise to malfunctions or damage.

The purpose of this invention is to propose a cabling system capable of eliminating the drawbacks complained about above with reference to the prior art.

This purpose is achieved with a cabling system according to claim 1, with a cabling method according to claim 8, and with an motor vehicle lamp according to claim 11. The dependent claims describe particularly advantageous preferred embodiments.

Further details and advantages of the cabling system and method according to this invention will, in any case, be evident from the following description of a preferred embodiment, provided by way of non-limiting example, with reference to the accompanying drawings, wherein:
Figure 1 shows an example of a cabling system for connecting four electronic printed circuit boards to an input connector of a motor vehicle lamp, according to the prior art;
Figure 2 is a schematic view of a cabling system according to the invention;
Figure 3 is a schematic view of the cabling system according to the invention, in an embodiment variant;
Figures 4, 4a and 4b show, in axial section and in correspondence to a pass-through seat of a cable, an insulation-piercing multipolar connector in a retracted inactive position, in the position of piercing the insulating sheath of an electrical cable, and without the insulation-piercing electrical contact, respectively;
Figure 5 shows the cabling system of the example of Figure 1, but realised according to the invention; and

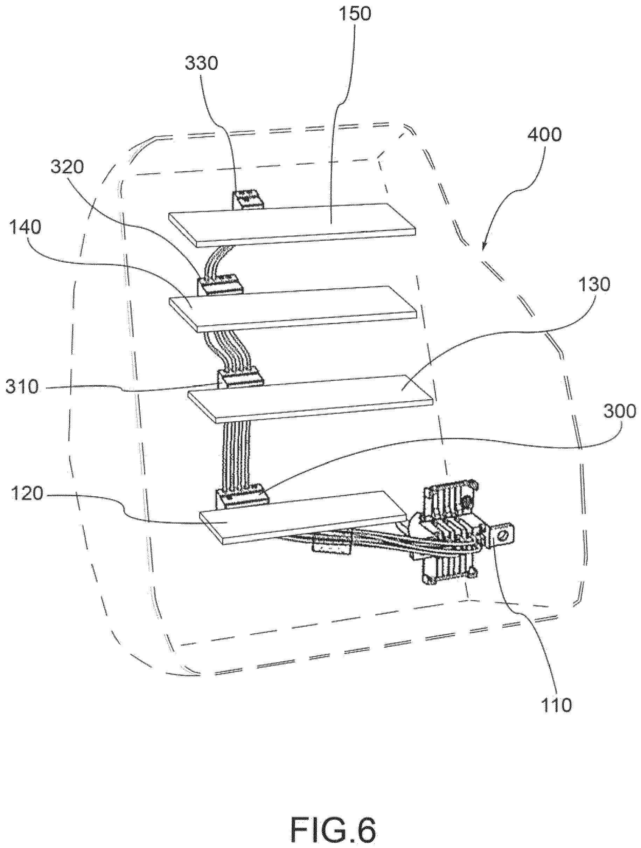

Figure 6 shows a motor vehicle lamp comprising a plurality of electronic printed circuit boards connected with a cabling system according to the invention.

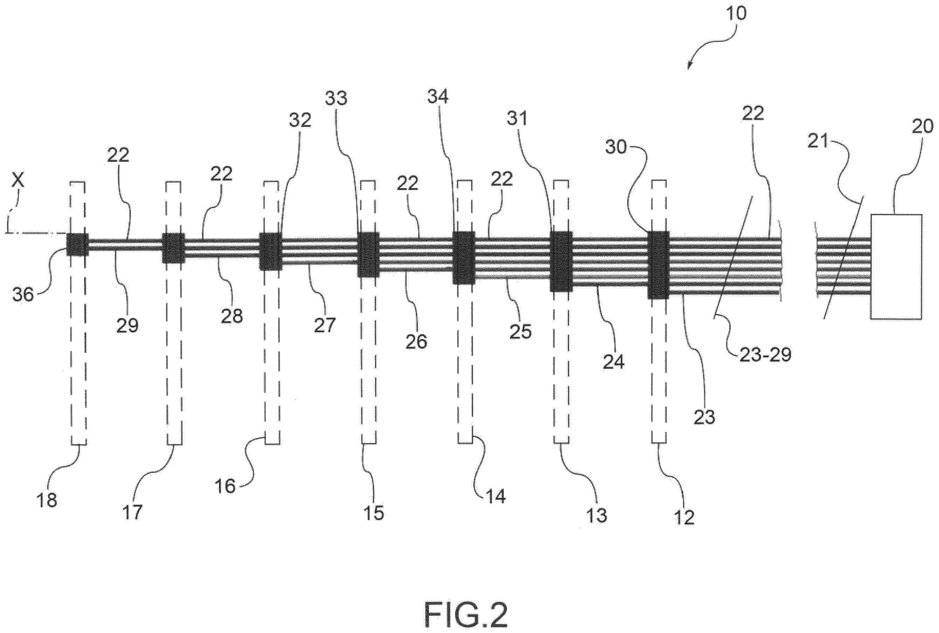

With reference to Figure 2, the reference number 10 indicates, in its entirety, a cabling system for connecting, to a plurality of electronic printed circuit boards 12-18, a common electrical cable 22, for example a grounding cable, and electrical board cables 23-29, for example power supply cables, at least some of such board cables having to be connected to a single, respective, electronic board. In other words, at least some of the boards receive their own board signal independently from each other.

The cabling system 10 comprises a bundle of cables 21, for example coming from an input electrical connector 20. The bundle of cables 21 comprises the common electrical cable 22 and a plurality of board cables 23-29.

The cabling system 10 also comprises a plurality of insulation-piercing multipolar connectors 30-36 placed in succession along the bundle of cables. Each of said multipolar connectors 30-36 is suitable to be connected to a respective electronic board 12-18 for connecting to said electronic board the common electrical cable 22 and a respective board cable.

Insulation-piercing multipolar connector means a multi-way connector, i.e., provided with multiple cable seats 40 electrically insulated from each other and suitable to receive respective electrical cables. Furthermore, at least some of these cable seats are engageable by an insulation-piercing electrical contact 42 suitable to pierce, i.e., cut, the insulating sheath that surrounds the conductive wires of the electrical cable, so as to allow a passage of electric current between the conductive wires and the electrical contact. The latter is also electrically connected to a respective terminal of the electronic board to which the connector is fixed.

At least some of the cable seats 40 are pass-through. Pass-through cable seat means that the electrical cord that enters the cable seat passes through the connector and exits from the cable seat to be inserted in the cable seat of a successive connector.

Preferably, the entrance and exit of a pass-through cable seat 40 are aligned with each other.

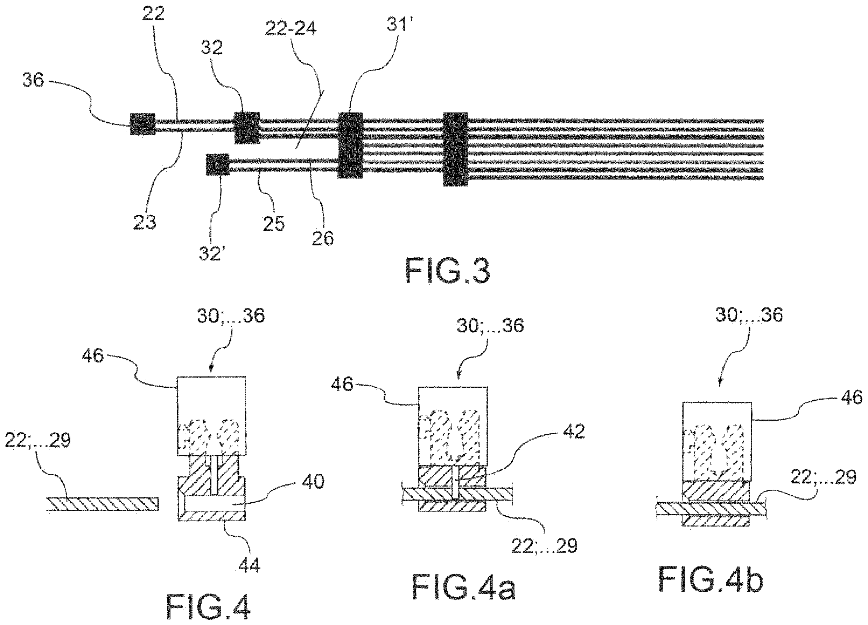

A pass-through cable seat 40 may be provided with an insulation-piercing electrical contact 42 (Figures 4, 4a) or may be without such an electrical contact (Figure 4b). In this second case, the connector functions merely as a retention and guide element for the electrical cable that is not engaged by the electrical contact.

In one embodiment, all the cable seats have insulation-piercing electrical contacts but not all the electrical contacts are electrically connected to the respective board.

In one embodiment, for reasons of production efficiency, all the cable seats 40 are equal and all are pass-through. The electrical cables that enter in a connector but do not continue towards the successive connectors are simply cut at the exit of the cable seat.

In one embodiment, the insulation-piercing electrical contacts 42 are movable between a retracted position of disengagement from the cable seat, so as to allow the insertion of the cable in the cable seat, and an advanced position, in which they perform the piercing or cutting of the sheath of the cable.

For example, the insulation-piercing connectors comprise two connector parts 44, 46, one movable (44) with respect to the other (46). One part supports the insulation-piercing contacts 42 and the other part forms the cable seats 40.

Each insulation-piercing connector, with the exception of a terminal connector, is thus suitable to receive from a preceding insulation-piercing connector, or from the input connector if it is the first of the plurality of multipolar connectors, the common cable 22, the board cable 23, ..., 29 for the respective electronic board, and the board cables 23, ..., 29 intended to be connected to the successive connectors.

Each multipolar connector, with the exception of the terminal connector 36, is also suitable to transmit to a successive multipolar connector or to the terminal connector 36 or the common cable 22 and the board cables that must be connected to the successive connectors.

Therefore, the cabling system 10 comprises at least one terminal connector 36, placed at the distal end of the bundle of cable 21, and a header connector 30, which receives all the cables of the bundle of cables 21.

The header connector 30 is provided with a number of electrically-insulated cable seats in which are inserted the common cable 22 and all the board cables 23-29, for example coming from the input connector 20.

The cable seat of the common cable 22 is pass-through and is engaged by an insulation-piercing contact suitable to electrically connect the common cable 22 to the electronic board 12 connected to the header connector 30. Another cable seat of the header connector 30 receives a board cable 23 and is engaged by an insulation-piercing contact suitable to electrically connect this board cable 23 to the electronic board 12 connected to the header connector 30.

The remaining cable seats 24-29 for board cables are pass-through and the respective electrical cables are not engaged by insulation-piercing electrical contacts.

Between the terminal connector 36 and the header connector 30 is positioned at least one insulation-piercing intermediate connector 31, ..., 35. This intermediate connector is provided with a number of electrically-insulated cable seats in which are inserted the common cable 22 and the board cables coming from the header connector 30 or from a preceding intermediate connector. The cable seat for the common cable 22 is pass-through and is engaged by an insulation-piercing contact suitable to electrically connect the common cable 22 to the respective electronic board; another cable receives a board cable 24 and is engaged by an insulation-piercing contact suitable to electrically connect the board cable to the respective electronic board; the remaining cable seats for the board cables are pass-through and the respective electrical cables are not engaged by insulation-piercing electrical contacts.

In a preferred embodiment, the cables of the cable bundle are arranged alongside each other so as to form a flat bundle, also called a "strip". Correspondingly, the multipolar connectors have a predominantly linear extension, with the cable seats alongside each other and lying in a seat plane. In this way, the bundles of cables maintain the shape of a strip.

In a preferred embodiment that allows facilitating the cabling of the bundle of cables to the multipolar connectors in an automatic or semi-automatic manner, all the multipolar connectors have the cable seat for the common cable positioned at a same end of the connector.

Furthermore, in a preferred embodiment the cable seat of the board cable of the board connected to the insulation-piercing connector is positioned at the opposite end of the connector with respect to the cable seat for the common cable.

Therefore, as is evident from the cabling diagram of Figure 2, the number of cables exiting from the multipolar connectors decreases proceeding from the opposite end with respect to the common cable.

Preferably, therefore, one can use connectors with a decreasing number of cable seats, arranging them from the largest header (facing the input connector) to the smallest (the terminal connector).

In a preferred embodiment, the insulation-piercing multipolar connectors are Lumberg series 35, 2.5 pitch, "pass-through" connectors. An example of such connectors is shown in Figures 4-4b. In Figure 4, note the pass-through cable seat 40 with the insulation-piercing electrical contact in the inactive retracted position; in Figure 4a, note the electrical contact in the advanced position of piercing the insulating sheath of an electrical cable 22, ..., 29; Figure 4b shows a pass-through cable seat without insulation-piercing contact, with the sole function of guiding the cable that passes through the connector.

In one embodiment, the cabling system can include intermediate bifurcations, as shown for example in Figure 3. Here, from an intermediate connector 31', three cables 22,23,24 depart directed towards a first connector 32 and two other cables 25,26 depart towards a second successive connector 32'. From the first successive connector 32, two electrical cables 22,23 depart and terminate in the terminal connector 36.

Figure 5 shows the cabling system according to the invention for the electronic boards of a motor vehicle lamp. The cabling system comprises an input connector 110, an electronic board for the brake light (Stop) 120, a first electronic board for a first group of light sources of a rear light (Tail Lower) 130, an electronic board for the turn signal (Turn) 140, and a second electronic board to a second group of rear light sources (Tail Up) 150. To each of these boards is fixed a respective insulation-piercing connector 300 to 310.

From the input electrical connector 110 extend a ground cable 220 that must be connected to all the electronic boards, a power supply cable for the rear light 230, which must be connected to both the first and the second board of the rear light, a power supply cable 240 of the electronic board 140 of the turn signal, a power supply cable 250 of the electronic board of the brake light 120, and a diagnostic cable 260 to be connected to the electronic board of the turn signal 140 to check the correct functioning of the turn signal.

As it can be seen from Figures 2 and 5, in all the connectors the seat for the ground cable is positioned at the left end of these connectors, and these are aligned along a reference line X tangent to that left end of all the connectors.

The five electrical cables 220-260 exiting from the input connector 110 enter the first insulation-piercing connector 300, which is therefore equipped with five ways or cable seats.

The power supply cable 250 of the electronic board of the brake light 120 ends in the first connector 300. Therefore, from this first connector extend four electrical cables 220,240,250,260 that enter the second connector 310 of the first board for the rear light 130. Since, in this case, also the second board 150 for the rear light must be powered with the same power supply cable of the first board 230, from the second connector 310 exit four electrical cables 220,230,240,260. Of course, of the four power cables that pass through the second connector 310, only the ground cable 220 and the power supply cable of the boards of the rear light 230 are cut by respective insulation-piercing electrical contacts. The other two cables are simply retained and guided by the second connector.

The four electrical cables enter the third connector 320 of the electronic board of the turn signal. In this third connector, the power supply cable of the respective board 240 and the diagnostic cable 260 end after being cut by the respective insulation-piercing electrical contacts.

Then, from the third connector, there exit only the first cables (from the left) 220,230 of the initial bundle of cables: the ground cable 230 and the power supply cable 230 of the second board of the rear light. These two cables end in the fourth (terminal) connector 330.

Comparing the cabling system of Figure 1 and Figure 5, note how the second has no branch connectors, is much more orderly and has significantly shorter cables.

The cabling system according to the invention can be advantageously realised with an automatic or semi-automatic machine that implements the following method of cabling electronic printed circuit boards.

The cabling method according to the invention comprises the following steps:- preparing a bundle of electrical cables comprising the common electrical cable and a plurality of board cables;- preparing a plurality of multipolar insulation-piercing connectors, each being suitable to be connected to a respective electronic board for electrically connecting to said electronic board the common cable and at least one board cable, each connector being provided with a plurality of cable seats, at least some of said cable
seats being engageable by an insulation-piercing electrical contact, at least some of said cable seats being not engageable by an insulation-piercing electrical contact or being engageable by an insulation-piercing electrical contact which is not electrically connected to the respective board;
- inserting, in a respective cable seat of each insulation-piercing connector, the common electrical cable, the board cable to be connected to the respective electronic board, and the board cables that must be connected to the successive connectors;
- extracting from the respective cable seats of each insulation-piercing cable connector, with the exception of a terminal connector that terminates the bundle, the common electrical cable and the cables that must be connected to the successive connectors;
- making the electrical contact between the electric cables and the respective boards.

Preferably, the connectors used have cable seats that are adjacent to one another and lie in a seat plane so as to form flat bundles of cables between the connectors.

Preferably, the cable seat for the common cable is positioned at one end of each insulation-piercing connector, and the connectors are positioned so as to be aligned with respect to a reference line tangent to said connector end.

This invention also covers a motor vehicle lamp 400 comprising a plurality of electronic printed circuit boards 120-150 suitable to drive respective light sources to realise lights of the lamp, an input electrical connector 110 provided at the entrance of the lamp and from which extends a bundle of cables comprising a grounding cable 220 to be connected to all the electronic boards and a plurality of power supply and/or other electrical signal cables, at least some of which to be independently connected to respective electronic boards, and a cabling system 10 of the bundle of cables to the electronic boards as described above.

To the embodiments of the cabling system and method according to the invention, a man skilled in the art, to satisfy contingent requirements, may make modifications, adaptations and replacements of members with others functionally equivalent, without departing from the scope of the following claims. Each of the characteristics described as belonging to a possible form of embodiment can be achieved independently from the other embodiments described.

## Claims

1. Cabling system for connecting, to a plurality of electronic printed circuit boards (12-18), a common electrical cable (22), for example a grounding cable, and respective electrical board cables (23-29), for example power supply cables for independently powering at least some of said electronic boards, comprising:
- a bundle of electrical cables (21) comprising the common electrical cable (22) and the plurality of board cables (23-29), at least some of said board cables being intended to be connected independently to the respective electronic boards;
- a plurality of multipolar, insulation-piercing connectors (30-36) placed in succession along said bundle of cables, each of said connectors being suitable to be connected to a respective electronic board for electrically connecting, to said electronic board, the common cable and at least one board cable (23-29), each insulation-piercing connector, with the exception of a terminal connector (36) that terminates the bundle of cables, being suitable to receive the common electrical cable, the board cable to be connected to the respective electronic board, and the board cables that must be connected to the successive connectors, and being suitable to transmit to a successive insulation-piercing connector, or the terminal connector, the common electrical cable and the board cables that must be connected to the successive connectors, wherein each insulation-piercing connector (30-36) is provided with cable seats (40) electrically insulated from each other and suitable to receive respective cables in input to the connector, wherein the cable seats for the cables that exit from the connector are pass-through seats, and wherein the cable seats for the cables that must be electrically connected to the electronic board to which the connector is fixed, are engageable by respective insulation-piercing electrical contacts (42) suitable to cut or pierce the respective electrical cable,
wherein each pass-through cable seat (40) is not provided with an insulation-piercing electrical contact (42) or all the cable seats have insulation-piercing electrical contacts but not all the electrical contacts (42) are electrically connected to the respective electronic board.

2. Cabling system according to claim 1, wherein the insulation-piercing connectors comprise at least one terminal connector (36), placed at the distal end of the cable bundle, and a header connector (30) provided with cable seats (40) electrically insulated from each other and suitable to receive all of the cables of the cable bundle, the cable seat for the common cable (22) being pass-through and being engageable by an insulation-piercing electrical contact (42), a cable seat for a board cable (23) being engageable by an insulation-piercing electrical contact (42) suitable to electrically connect said board cable (23) to the electronic board (12) connected to the header connector (30), the remaining cable seats for the board cables (24-29) being pass-through and having a function of retaining and guiding said cables.

3. Cabling system according to claim 1 or 2, wherein the insulation-piercing connectors comprise at least one intermediate connector (31-35) positioned between the terminal connector (36) and the header connector (30), said intermediate connector being provided with of a number electrically insulated cable seats in which are inserted the common cable (22) and the board cables coming from the header connector head or from a previous intermediate connector, the cable seat for the common cable being pass-through and being engageable by an insulation-piercing electrical contact, a cable seat for a board cable being engageable by an insulation-piercing electrical contact, the remaining cable seats for board cables being pass-through seats with the function of retaining and guiding the respective cables.

4. Cabling system according to any of claims 1-3, wherein the cable seats (40) are adjacent to one another and lie in a seat plane so as to form flat bundles of cables between the connectors.

5. Cabling system according to the preceding claim, wherein the cable seat for the common cable is positioned at one end of each insulation-piercing connector, and wherein the cable seat for the board cable to be connected to the board connected to the insulation-piercing connector is positioned at the opposite end of said connector.

6. Cabling system according to any of the preceding claims, comprising an input connector (20, 110) from which there extends the bundle of cables directed towards the header connector (30, 300).

7. Cabling method for connecting, to a plurality of electronic printed circuit boards, a common electrical cable, for example a grounding cable, and respective electrical board wires, for example power supply cables for independently powering at least some of said electronic boards, comprising the steps of:
- preparing a bundle of electrical cables comprising the common electrical cable and the plurality of board cables;
- preparing a plurality of multipolar insulation-piercing connectors, each being suitable to be connected to a respective electronic board for electrically connecting to said electronic board the common cable and at least one board cable, each connector being provided with a plurality of cable seats, at least some of said cable seats being engageable by an insulation-piercing electrical contact, at least some of said cable seats being not provided with an insulation-piercing electrical contact or all the cable seats having insulation-piercing electrical contacts but not all the electrical contacts being electrically connected to the respective board;
- inserting, in a respective cable seat of each insulation-piercing connector, the common electrical cable, the board cable to be connected to the respective electronic board, and the board cables that must be connected to the successive connectors;
- extracting from the respective cable seats of each insulation-piercing cable connector, with the exception of a terminal connector that terminates the bundle, the common electrical cable and the cables that must be connected to the successive connectors;
- making the electrical contact between the electric cables and the respective boards.

8. Cabling method according to the preceding claim, wherein the cable seats are adjacent to one another and lie in a seat plane so as to form flat bundles of cables between the connectors.

9. Cabling method according to the preceding claim, wherein the cable seat for the common cable is positioned at one end of each insulation-piercing connector, and wherein the connectors are positioned so as to be aligned with respect to a reference line tangent to said connector end.

10. Motor vehicle lamp, comprising a plurality of electronic printed circuit boards (120, 130, 140, 150) suitable to drive respective light sources to realise lights of the lamp, an input electrical connector (110) at the input of the lamp, from which extends a bundle of cables comprising a grounding cable (220) to be connected to all the electronic boards and a plurality of power supply cables (230, 240, 250), at least some of which to be independently connected to respective electronic boards, and a cabling system of the bundle of cables to the electronic boards according to any of claims 1 to 5.

## Patentansprüche

1. Verkabelungssystem zum Verbinden, mit einer Mehrzahl elektronsicher gedruckter Leiterplatten (12-18), eines gemeinsamen elektrischen Kabels (22), beispielsweise eines Erdungskabels, und jeweiliger elektrischer Platinenkabel (23-29), beispielsweise Leistungsversorgungskabel zum unabhängigen Versorgen zumindest einiger der elektronischen Platinen mit Leistung, umfassend:
- ein Bündel elektrischer Kabel (21), welches das gemeinsame elektrische Kabel (22) und die Mehrzahl von Platinenkabeln (23-29) umfasst, wobei zumindest einige der Platinenkabel dazu gedacht sind, unabhängig mit den jeweiligen elektronischen Platinen verbunden zu werden;
- eine Mehrzahl von multipolaren, isolierungsdurchdringenden Verbindern (30-36), die hintereinander entlang des Kabelbündels platziert sind, wobei jeder der Verbinder geeignet ist, mit einer jeweiligen elektronischen Platine verbunden zu werden, um das gemeinsame Kabel und das zumindest eine Platinenkabel (23-29) elektrisch mit der elektronischen Platine zu verbinden, wobei jeder isolierungsdurchdringende Verbinder, mit Ausnahme eines Anschlussverbinders (36), der das Kabelbündel abschließt, geeignet ist, das gemeinsame elektrische Kabel, das Platinenkabel, das mit der jeweiligen elektronischen Platine zu verbinden ist, und die Platinenkabel aufzunehmen, die mit den aufeinanderfolgenden Verbindern verbunden werden müssen, und geeignet ist, an einen folgenden isolierungsdurchdringenden Verbinder, oder den Anschlussverbinder, das gemeinsame elektrische Kabel und die Platinenkabel zu übertragen, die mit den aufeinanderfolgenden Verbindern verbunden werden müssen, wobei jeder isolierungsdurchdringende Verbinder (30-36) mit elektrisch voneinander isolierten Kabelsitzen (40) versehen ist, die zur Aufnahme jeweiliger Kabel geeignet sind, die in den Verbinder eingehen, wobei die Kabelsitze für die Kabel, die aus dem Verbinder austreten, Durchgangsitze sind, und wobei die Kabelsitze für die Kabel, die elektrisch mit der elektronischen Platine verbunden werden müssen, an der der Verbinder befestigt ist, durch jeweilige isolierungsdurchdringende elektrische Kontakte (42) in Eingriff bringbar sind, die geeignet sind, das jeweilige elektrische Kabel zu schneiden oder zu durchdringen,
wobei jeder Durchgangskabelsitz (40) nicht mit einem isolierungsdurchdringenden elektrischen Kontakt (42) versehen ist oder alle Kabelsitze isolierungsdurchdringende elektrische Kontakte aufweisen, aber nicht alle elektrischen Kontakte (42) elektrisch mit der jeweiligen elektronischen Platine verbunden sind.

2. Verkabelungssystem nach Anspruch 1, wobei die isolierungsdurchdringenden Verbinder zumindest einen an dem distalen Ende des Kabelbündels platzierten Anschlussverbinder (36) und einen Header-Verbinder (30) umfassen, der mit Kabelsitzen (40) versehen ist, die elektrisch voneinander isoliert sind und geeignet sind, alle Kabel des Kabelbündels aufzunehmen, wobei der Kabelsitz für das gemeinsame Kabel (22) durchgängig ist und durch einen isolierungsdurchdringenden elektrischen Kontakt (42) in Eingriff bringbar ist, wobei ein Kabelsitz für ein Platinenkabel (23) durch einen isolierungsdurchdringenden elektrischen Kontakt (42) in Eingriff bringbar ist, der geeignet ist, das Platinenkabel (23) elektrisch mit der elektronischen Platine (12) zu verbinden, die mit dem Header-Verbinder (30) verbundenen ist, wobei die verbleibenden Kabelsitze für die Platinenkabel (24-29) durchgängig sind und eine Funktion des Zurückhaltens und Führens der Kabel aufweisen.

3. Verkabelungssystem nach Anspruch 1 oder 2, wobei die isolierungsdurchdringenden Verbinder zumindest einen Zwischenverbinder (31-35) umfassen, der zwischen dem Anschlussverbinder (36) und dem Header-Verbinder (30) positioniert ist, wobei der Zwischenverbinder mit einer Anzahl elektrisch isolierter Kabelsitze versehen ist, in die das gemeinsame Kabel (22) und die Platinenkabel eingesetzt sind, die von dem Kopf des Header-Verbinders oder von einem vorherigen Zwischenverbinder kommen, wobei der Kabelsitz für das gemeinsame Kabel durchgängig ist und durch einen isolierungsdurchdringenden elektrischen Kontakt in Eingriff bringbar ist, wobei ein Kabelsitz für ein Platinenkabel durch einen isolierungsdurchdringenden elektrischen Kontakt in Eingriff bringbar ist, wobei die verbleibenden Kabelsitze für Platinenkabel Durchgangsitze sind, mit der Funktion des Zurückhaltens und Führens der jeweiligen Kabel.

4. Verkabelungssystem nach einem der Ansprüche 1-3, wobei die Kabelsitze (40) angrenzend an bzw. benachbart zu einander sind und in einer Sitzebene liegen, um flache Kabelbündel zwischen den Verbindern zu bilden.

5. Verkabelungssystem nach dem vorhergehenden Anspruch, wobei der Kabelsitz für das gemeinsame Kabel an einem Ende jedes isolierungsdurchdringenden Verbinders positioniert ist, und wobei der Kabelsitz für das Platinenkabel, das mit der Platine zu verbinden ist, die mit dem isolierungsdurchdringenden Verbinder verbunden ist, an dem gegenüberliegenden bzw. entgegengesetzten Ende des Verbinders positioniert ist.

6. Verkabelungssystem nach einem der vorhergehenden Ansprüche, umfassend einen Eingangsverbinder (20, 110), von dem sich das Kabelbündel erstreckt, das in Richtung des Header-Verbinders (30, 300) gerichtet ist.

7. Verkabelungsverfahren zum Verbinden, mit einer Mehrzahl elektronsicher gedruckter Leiterplatten, eines gemeinsamen elektrischen Kabels, beispielsweise eines Erdungskabels, und jeweiliger elektrischer Platinendrähte, beispielsweise Leistungsversorgungskabel zum unabhängigen Versorgen zumindest einiger der elektronischen Platinen mit Leistung, umfassend die Schritte:
- Vorbereiten bzw. Herstellen eines Bündels elektrischer Kabel, welches das gemeinsame elektrische Kabel und die Mehrzahl von Platinenkabeln umfasst;
- Vorbereiten bzw. Herstellen einer Mehrzahl von multipolaren, isolierungsdurchdringenden Verbindern, die jeder geeignet sind, mit einer jeweiligen elektronischen Platine verbunden zu werden, um das gemeinsame Kabel und zumindest ein Platinenkabel elektrisch mit der elektronischen Platine zu verbinden, wobei jeder Verbinder mit einer Mehrzahl von Kabelsitzen versehen ist, wobei zumindest einige der Kabelsitze durch einen isolierungsdurchdringenden elektrischen Kontakt in Eingriff bringbar sind, wobei zumindest einige der Kabelsitze nicht mit einem isolierungsdurchdringenden elektrischen Kontakt versehen sind oder alle Kabelsitze isolierungsdurchdringende elektrische Kontakte aufweisen, aber nicht alle elektrischen Kontakte elektrisch mit der jeweiligen elektronischen Platine verbunden sind;
- Einsetzen, in einen jeweiligen Kabelsitz jedes isolierungsdurchdringenden Verbinders, des gemeinsamen elektrischen Kabels, des mit der jeweiligen elektronischen Platine zu verbindenden Platinenkabels und der Platinenkabel, die mit den aufeinanderfolgenden Verbindern verbunden werden müssen;
- Herausziehen aus den jeweiligen Kabelsitzen jedes durch isolierungsdurchdringenden Kabelverbinders, mit Ausnahme eines Anschlussverbinders, der das Bündel abschließt, des gemeinsamen elektrischen Kabeln und der Kabel, die mit den aufeinanderfolgenden Verbindern verbunden werden müssen;
- Herstellen des elektrischen Kontakts zwischen den elektrischen Kabeln und den jeweiligen Platinen.

8. Verkabelungsverfahren nach dem vorhergehenden Anspruch, wobei die Kabelsitze angrenzend an bzw. benachbart zu einander sind und in einer Sitzebene liegen, um flache Kabelbündel zwischen den Verbindern zu bilden.

9. Verkabelungsverfahren nach dem vorhergehenden Anspruch, wobei der Kabelsitz für das gemeinsame Kabel an einem Ende jedes isolierungsdurchdringenden Verbinders positioniert ist und wobei die Verbinder so positioniert sind, dass sie in Bezug auf eine Referenzlinie ausgerichtet sind, die das Verbinderende tangiert.

10. Kraftfahrzeugleuchte, umfassend eine Mehrzahl elektronischer gedruckter Leiterplatten (120, 130, 140, 150), die zum Ansteuern jeweiliger Lichtquellen geeignet sind, um Lichter der Leuchte zu realisieren, einen elektrischen Eingangsverbinder (110) am Eingang der Lampe, von dem sich ein Kabelbündel erstreckt, das ein Erdungskabel (220), das mit allen elektronischen Platinen zu verbinden ist, und eine Mehrzahl von Leistungsversorgungskabeln (230, 240, 250) umfasst, von denen zumindest einige unabhängig voneinander mit jeweiligen elektronischen Platinen zu verbinden sind, und ein Verkabelungssystem des Kabelbündels mit den elektronischen Platinen nach einem der Ansprüche 1 bis 5.

## Revendications

1. Système de câblage pour connecter, à une pluralité de cartes de circuit imprimé électroniques (12-18), un câble électrique commun (22), par exemple un câble de mise à la masse, et des câbles de carte électriques respectifs (23-29), par exemple des câbles d'alimentation électrique pour alimenter indépendamment au moins certaines desdites cartes électroniques, comprenant :
- un faisceau de câbles électriques (21) comprenant le câble électrique commun (22) et la pluralité de câbles de carte (23-29), au moins certains desdits câbles de carte étant destinés à être connectés indépendamment aux cartes électroniques respectives ;
- une pluralité de connecteurs de perçage d'isolation multipolaires (30-36) placés en succession le long dudit faisceau de câbles, chacun desdits connecteurs étant adapté pour être connecté à une carte électronique respective pour connecter électriquement, à ladite carte électronique, le câble commun et au moins un câble de carte (23-29), chaque connecteur de perçage d'isolation, à l'exception d'un connecteur terminal (36) qui termine le faisceau de câbles, étant adapté pour recevoir le câble électrique commun, le câble de carte qui doit être connecté à la carte électronique respective, et les câbles de carte qui doivent être connectés aux connecteurs successifs, et étant adapté pour transmettre à un connecteur de perçage d'isolation successif, ou au connecteur terminal, le câble électrique commun et les câbles de carte qui doivent être connectés aux connecteurs successifs, dans lequel chaque connecteur de perçage d'isolation (30-36) est muni de sièges de câble (40) isolés électriquement l'un de l'autre et adaptés pour recevoir des câbles respectifs en entrée sur le connecteur, dans lequel les sièges de câble pour les câbles qui sortent du connecteur sont des sièges passants, et dans lequel les sièges de câble pour les câbles qui doivent être connectés électriquement à la carte électronique à laquelle le connecteur est fixé, peuvent être engagés par des contacts électriques de perçage d'isolation respectifs (42) adaptés pour couper ou percer le câble électrique respectif,
dans lequel chaque siège de câble passant (40) n'est pas muni d'un contact électrique de perçage d'isolation (42) ou tous les sièges de câble ont des contacts électriques de perçage d'isolation mais pas tous les contacts électriques (42) sont connectés électriquement à la carte électronique respective.

2. Système de câblage selon la revendication 1, dans lequel les connecteurs de perçage d'isolation comprennent au moins un connecteur terminal (36), placé à l'extrémité distale du faisceau de câbles, et un connecteur de tête (30) muni de sièges de câble (40) isolés électriquement l'un de l'autre et adaptés pour recevoir la totalité des câbles du faisceau de câbles, le siège de câble pour le câble commun (22) étant passant et pouvant être engagé par un contact électrique de perçage d'isolation (42), un siège de câble pour un câble de carte (23) pouvant être engagé par un contact électrique de perçage d'isolation (42) adapté pour connecter électriquement ledit câble de carte (23) à la carte électronique (12) connectée au connecteur de tête (30), les sièges de câble restants pour les câbles de carte (24-29) étant passants et ayant une fonction de retenue et de guidage desdits câbles.

3. Système de câblage selon la revendication 1 ou 2, dans lequel les connecteurs de perçage d'isolation comprennent au moins un connecteur intermédiaire (31-35) positionné entre le connecteur terminal (36) et le connecteur de tête (30), ledit connecteur intermédiaire étant muni d'un nombre de sièges de câble isolés électriquement dans lesquels sont insérés le câble commun (22) et les câbles de carte provenant de la tête du connecteur de tête ou d'un connecteur intermédiaire précédent, le siège de câble pour le câble commun étant passant et pouvant être engagé par un contact électrique de perçage d'isolation, un siège de câble pour un câble de carte pouvant être engagé par un contact électrique de perçage d'isolation, les sièges de câble restants pour des câbles de carte étant des sièges passants avec la fonction de retenue et de guidage des câbles respectifs.

4. Système de câblage selon l'une quelconque des revendications 1 à 3, dans lequel les sièges de câble (40) sont adjacents l'un à l'autre et se situent dans un plan de siège de manière à former des faisceaux plats de câbles entre les connecteurs.

5. Système de câblage selon la revendication précédente, dans lequel le siège de câble pour le câble commun est positionné à une extrémité de chaque connecteur de perçage d'isolation, et dans lequel le siège de câble pour le câble de carte à connecter à la carte connectée au connecteur de perçage d'isolation est positionné à l'extrémité opposée dudit connecteur.

6. Système de câblage selon l'une quelconque des revendications précédentes, comprenant un connecteur d'entrée (20, 110) à partir duquel s'étend le faisceau de câbles dirigé vers le connecteur de tête (30, 300).

7. Procédé de câblage pour connecter, à une pluralité de cartes de circuit imprimé électroniques, un câble électrique commun, par exemple un câble de mise à la masse, et des câbles de carte électriques respectifs, par exemple des câbles d'alimentation électrique pour alimenter indépendamment au moins certaines desdites cartes électroniques, comprenant les étapes suivantes :
- la préparation d'un faisceau de câbles électriques comprenant le câble électrique commun et la pluralité de câbles de carte ;
- la préparation d'une pluralité de connecteurs de perçage d'isolation multipolaires, chacun étant adapté pour être connecté à une carte électronique respective pour connecter électriquement, à ladite carte électronique, le câble commun et au moins un câble de carte, chaque connecteur étant muni d'une pluralité de sièges de câble, au moins certains desdits sièges de câble pouvant être engagés par un contact électrique de perçage d'isolation, au moins certains desdits sièges de câble n'étant pas munis d'un contact électrique de perçage d'isolation ou tous les sièges de câble ayant des contacts électriques de perçage d'isolation mais pas tous les contacts électriques étant connectés électriquement à la carte respective ;
- l'insertion, dans un siège de câble respectif de chaque connecteur de perçage d'isolation, du câble électrique commun, du câble de carte à connecter à la carte électronique respective et des câbles de carte qui doivent être connectés aux connecteurs successifs ;
- l'extraction des sièges de câbles respectifs de chaque connecteur de câble de perçage d'isolation, à l'exception d'un connecteur terminal qui termine le faisceau, du câble électrique commun et des câbles qui doivent être connectés aux connecteurs successifs ;
- la réalisation du contact électrique entre les câbles électriques et les cartes respectives.

8. Procédé de câblage selon la revendication précédente, dans lequel les sièges de câble sont adjacents l'un à l'autre et se situent dans un plan de siège de manière à former des faisceaux plats de câbles entre les connecteurs.

9. Procédé de câblage selon la revendication précédente, dans lequel le siège de câble pour le câble commun est positionné à une extrémité de chaque connecteur de perçage d'isolation, et dans lequel les connecteurs sont positionnés de manière à être alignés par rapport à une ligne de référence tangente à ladite extrémité de connecteur.

10. Lampe pour véhicule à moteur comprenant une pluralité de cartes de circuit imprimé électroniques (120, 130, 140, 150) adaptées pour piloter des sources de lumière respectives pour réaliser des lumières de la lampe, un connecteur électrique d'entrée (110) au niveau de l'entrée de la lampe, à partir duquel s'étend un faisceau de câbles comprenant un câble de mise à la masse (220) à connecter à toutes les cartes électroniques et une pluralité de câbles d'alimentation électrique (230, 240, 250), au moins certains desquels étant destinés à être connectés indépendamment à des cartes électroniques respectives, et un système de câblage du faisceau de câbles aux cartes électroniques selon l'une quelconque des revendications 1 à 5.
